# EUROPEAN PATENT APPLICATION

(11) **EP 1 621 117 A1**
(43) Date of publication of application: **01.02.2006**
(21) Application number: 05404002.7
(22) Date of filing: 30.06.2005
(51) Int. Cl.: A47J 43/08

(54) **Kitchen robot**

(30) Priority: 29.07.2004 TR 200401889
(71) Applicant: Erna-Mas Makina Ticaret Ve Sanayi A.S., Istanbul (TR)
(72) Inventor: Gursel, Ilhan, Ataturk Organize Sanayi Bolgesi, Hadimkoy Istanbul (TR)
(74) Representative: Basalan, Ahmet

(57) **Abstract**

Present invention is related to the use of a drive unit (2) that is movable in vertical and horizontal/circular directions automatically and in a combined way via a locking switch (1) located thereon and equipped with outlet shaft having a main motor and a motion transfer mechanism, and a motor actuating/speed adjusting electronic arrangement control switch (3), in the devices for food preparation, i.e. in the kitchen robots.

## Description

Present invention is related to the use of a drive unit (2) that is movable in vertical and horizontal/circular directions automatically and in a combined way via a locking switch (1) located thereon and equipped with outlet shaft having a main motor and a motion transfer mechanism, and a motor actuating/speed adjusting electronic arrangement control switch (3), in the devices for food preparation, i.e. in the kitchen robots.

It is easier to use than the traditional kitchen robots available at the market and also it is possible to use those units made of glass.

This invention, as different from the traditional kitchen robots, has a movable drive unit disposed in the robot body (6) and thus ensures all food preparation actions, such as food cutting, ice breaking, meat mincing, dough kneading, egg beating with a mixer apparatus, cake holding, squeezing rigid fruits and vegetables, orange squeezing, grating, mixing juices, potato slicing, cheese grating, etc. either in the robot container (4) or in the blender container (5).

In this invention, one of the work accessories (cutting/slicing/smashing/mixing/dough conditioning/rigid fruit or vegetable squeezing) required is located in the robot container or blender while the kitchen robot is standstill, the lids are closed appropriately and the device is prepared for functioning by moving the drive unit circularly and fitting it in its seat on the lid.

In this invention, the movable drive unit is located on the kitchen robot or the accessory in the blender container that is ready for operation with a circular and limited rotary, pushed manually, locked to the body and attached to the accessory and the motor is actuated with the electronic arrangement switch.

In this invention, the switch disposed on the movable drive unit is only movable after the motor is completely stopped, and moved first in vertical, then in circular directions to release the working container (robot container or blerider).

### ADVANTAGES OF THIS INVENTION

1) It is very easier to use than the traditional kitchen robots.
2) In this invention, the movable (not stationary) drive unit drives the work accessories in the robot container from above (no funnel present in the robot container).
3) In this invention, the movable drive unit drives the work accessories in the blender container disposed in the place of robot container.
4) In this invention, all safety rules are duly observed since either the robot container or the blender container is forcefully covered by the drive unit located on the lid during operation.
5) As a result of the arrangement of this invention, a robot container made of glass or a blender container made of glass can be used, which is impossible with the traditional robots.
6) As a result of the arrangement of this invention, a kitchen robot having a movable drive unit, can have a blender container or robot container, made of both glass, plastics and stainless steel.

### DESCRIPTION OF FIGURES:

**Figure 1:**
   (2) Movable drive unit (Motor standstill position)
   (3) Actuating/Speed Adjustment Switch
   (1) Unlocking switch
   (6) Robot Body
   (4) Robot container
**Figure 2:**
   (2) Movable drive unit (working position)
   (4) Robot container
**Figure 3:**
   (2) Movable drive unit (working position)
   (4) Blender container
**Figure 4:**
   (2) Movable drive unit (free position)
   (4) Blender container

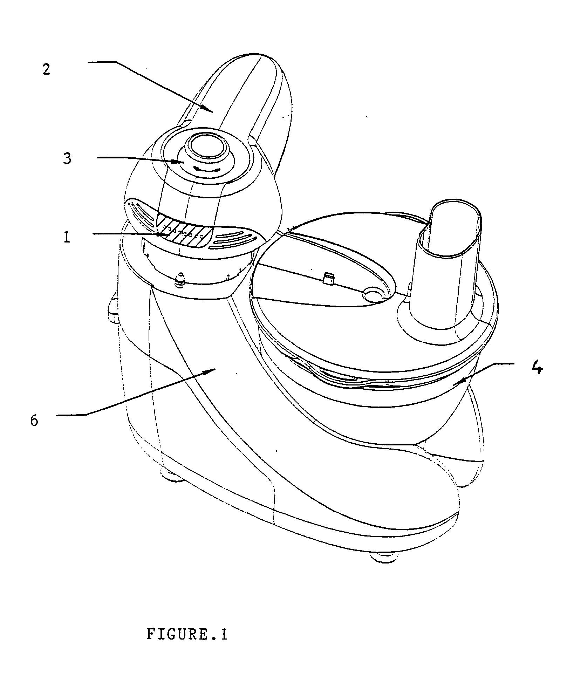

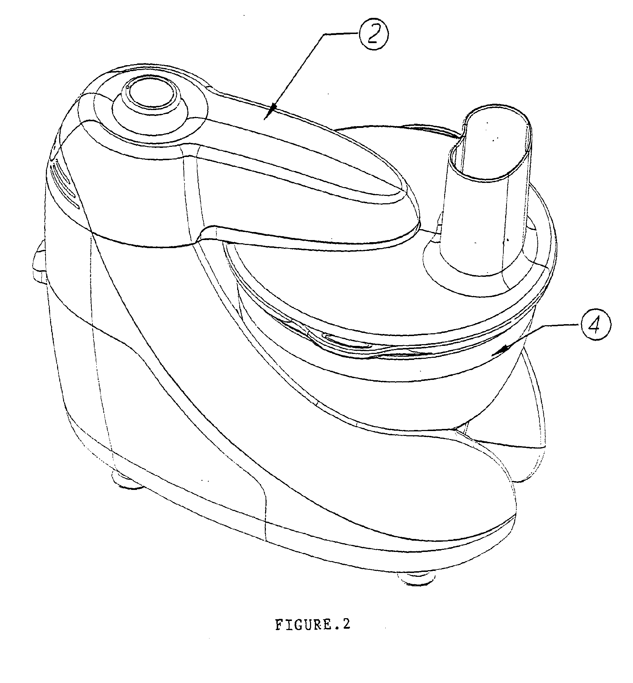

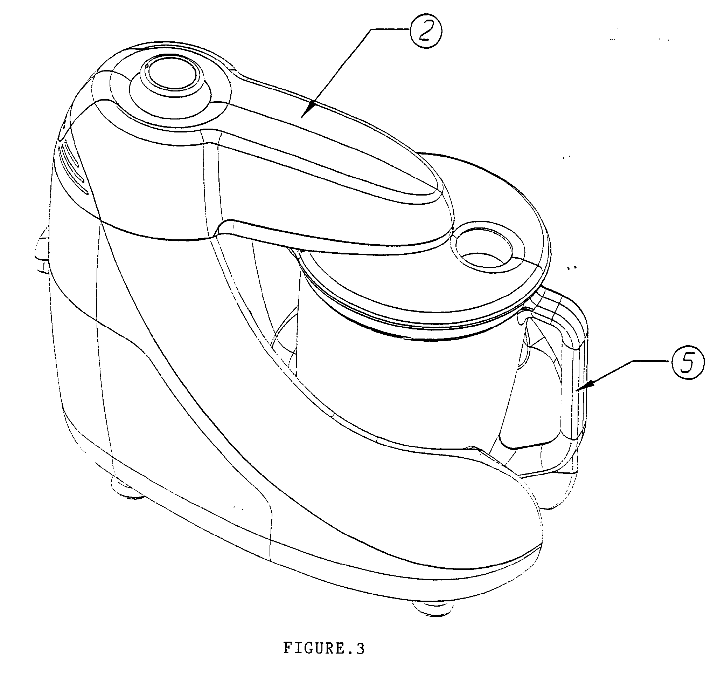

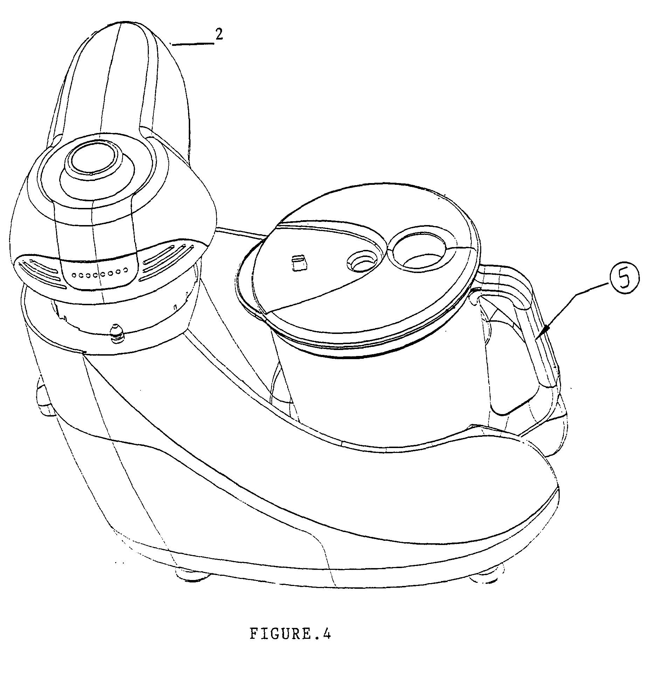

## Claims

1. The use of a drive unit (2) that is movable in vertical and horizontal/circular directions automatically and in a combined way via a locking switch (1) located thereon and equipped with outlet shaft having a main motor and a motion transfer mechanism, and a motor actuating/speed adjusting electronic arrangement control switch (3), in the devices for food preparation, i.e. in the kitchen robots, **characterized in that** it has a movable drive unit disposed in the robot body (6) and thus ensures all food preparation actions, such as food cutting, ice breaking, meat mincing, dough kneading, egg beating with a mixer apparatus, cake holding, squeezing rigid fruits and vegetables, orange squeezing, grating, mixing juices, potato slicing, cheese grating, etc. either in the robot container (4) or in the blender container (5).

2. The use according to claim 1, wherein one of the work accessories (cutting/slicing/smashing/mixing/dough conditioning/rigid fruit or vegetable squeezing) required is located in the robot container or blender while the kitchen robot is standstill, the lids are closed appropriately and the device is prepared for functioning by moving the drive unit circularly and fitting it in its seat on the lid.

3. The use according to claim 1, wherein the movable drive unit is located on the kitchen robot or the accessory in the blender container that is ready for operation with a circular and limited rotary, pushed manually, locked to the body and attached to the accessory and the motor is actuated with the electronic arrangement switch.

4. The use according to claim 1, wherein the switch disposed on the movable drive unit is only movable after the motor is completely stopped, and moved first in vertical, then in circular directions to release the working container (robot container or blender).
